# EUROPEAN PATENT SPECIFICATION

(11) **EP 0 618 835 B1**
(45) Date of publication and mention of the grant of the patent: **11.10.1995**
(21) Application number: 92923902.8
(22) Date of filing: 24.11.1992
(51) Int. Cl.: B01D 46/24, F25B 43/02, F04C 29/02

(54) **FILTER FOR PURIFICATION OF GAS**
FILTER ZUR REINIGUNG VON GASEN
FILTRE DE PURIFICATION DE GAZ

(30) Priority: 26.11.1991 GB 9125140
(43) Date of publication of application: 12.10.1994
(73) Proprietor: PROCESS SCIENTIFIC INNOVATIONS LIMITED, Bowburn Durham, DH6 5AD (GB)
(72) Inventor: HUNTER, Alex, George, Catterick Village North Yorks DL10 7LL (GB)
(74) Representative: Beresford, Keith Denis Lewis
(86) International application number: GB9202167
(87) International publication number: WO9310881

(56) References cited:
- EP-A- 0 278 772
- WO-A-84/04050
- WO-A-90/02597
- FR-A- 2 263 804
- GB-A- 1 479 753
- GB-A- 2 033 247
- GB-A- 2 126 497
- US-A- 4 231 768

## Description

The present invention relates to a filter element for the filtration of a stream of gas contaminated with liquid in the form of mist.

Air flow from oil-lubricated gas compressors or vacuum pumps is normally contaminated with oil mist. In order to remove this contamination the air is passed through a coalescing filter and an example of a known type of such filter is disclosed in GB-A-2033247 and is shown in Figure 1 of the accompanying drawings. The filter is generally tubular and comprises a coalescing layer 10 of microporous material which fits closely between inner and outer foraminous metal cylinders 12,14 and extends between upper and lower end caps 16,18. The upper end cap 16 is formed with a port 20 to permit the stream 22 of oil-contaminated air to enter the interior of the filter and the lower end cap 18 is closed as shown. The coalescing layer 10 is sealed gas-tightly to the end caps 16,18 by a curable sealant, e.g. an epoxy resin. The coalescing layer 10 is in this instance of one or more pleated sheets of resin-impregnated borosilicate glass microfibres as disclosed in Patent No. GB-A-1557821. An alternative form of coalescing layer which is formed by moulding is disclosed in Patent No. GB-A-1603519. Also extending between the end caps 16,18 and covering the outer surface of the foraminous cylinder 14 is a drainage layer 24 which in this instance is of an open-celled foam plastics material, although coalescing filters whose drainage layers are of a felted fabric material e.g. as disclosed in our Patent Specification No. PCT/GB 89/00182 are also known. To minimise oil carryover, the drainage layer is preferably treated with a fluorocarbon. The air entering the filter travels radially outward through the coalescing layer 10 and through the drainage layer 24 from which it is discharged radially as indicated at 26. Coalescing filters of this kind can be used in a number of attitudes, but this invention is concerned with coalescing filters which are intended to depend vertically downwards from a filter head and to fit with the removable bowl of such a filter head.

Droplets of oil carried with the air 22 are coalesced by the microporous coalescing layer 10 where the individual tiny droplets are combined, and the oil is carried outwards to the drainage layer 24 where it flows downwards to form an oil-saturated band or wet zone 28 at the lower end of the drainage layer 24, the oil gradually dropping from the wet zone 28 as individual large drops 30.

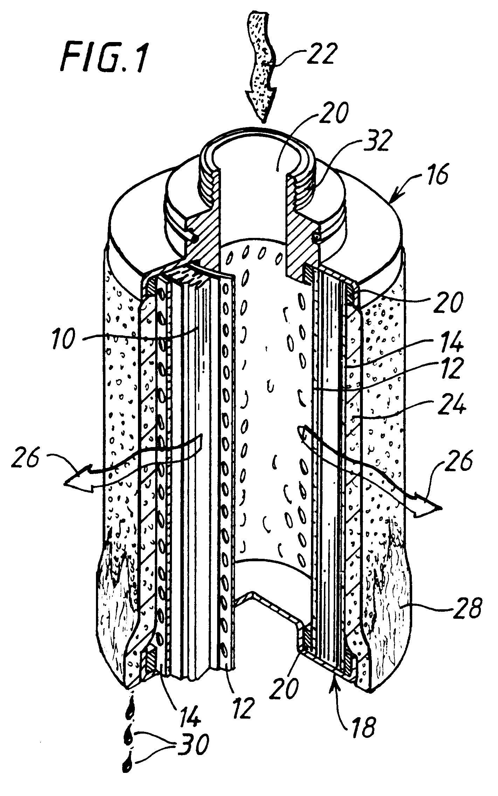

It will be noted from Figure 1 that the wet zone 28 which forms in normal use of the filter is of sufficient height that a significant portion thereof is in overlapping relationship with the coalescing layer 10. Air from the lower part of the coalescing filter 10 is forced to travel outward through the wet zone 28 where it disturbs the oil and can form bursting bubbles on or adjacent the outer surface of the drainage layer 24. These bursting bubbles of oil in the wet zone 28 re-form fine oil particles on the clean side of the filter which are carried into the clean air stream 26 and reduce the filtration efficiency.

The particular design of coalescing filter shown in Figure 1 is unusual in that the lower end of the drainage layer 24 is not confined within the lower end cap 18 but is free on the outside thereof. More usually, both the coalescing and the drainage layer fit on or into the lower end cap as is shown in Patent No. GB-A-1345155. The filter may be connected to the filter head with which it is intended to be used by a screw connection 32 in the top cap 16. Alternatively, a tie rod threaded at its lower end can depend from the filter head and can fit into a threaded socket in the end cap 18. The filter may also fit to the filter head by a bayonet connection. With all these arrangements, during the fitting operation the filter is gripped in the fingers of the user's hand at its lower end and is offered up to the filter head where it is twisted or screwed into position.

This invention is based on the realisation that provided the drainage layer is undisturbed at its lower end and terminates at a quiet region axially below the coalescing layer, the oil saturated band or wet zone that forms in the drainage layer can be caused substantially not to overlap the coalescing layer or do so to a greatly reduced extent. The disturbance which can lead to an undesired increase in the height of the wet zone includes pressure, compression or indenting of the drainage layer, for example when it is pressed into a channel in an end cap and also includes compression of the lower end of the drainage layer 24 by handling with the user's fingers when the filter is fitted to the filter head. Disturbance which raises the height of the wet band also includes obstructing the lower end of the drainage layer so that the initial escape of oil therefrom is solely through the side and not through the end of the drainage layer.

The invention provides a tubular filter element having the features claimed in claim 1.

Various forms of the invention will now be described, by way of example only, with reference to the accompanying drawings, in which:
Figure 1 is a perspective view of a prior art coalescing filter;
Figure 2 is a half-sectioned elevation of a filter according to the invention;
Figure 3 is a perspective view of a lower end cap forming part of the filter of Figure 2; and
Figure 4 is a perspective view of an alternative form of the end cap.

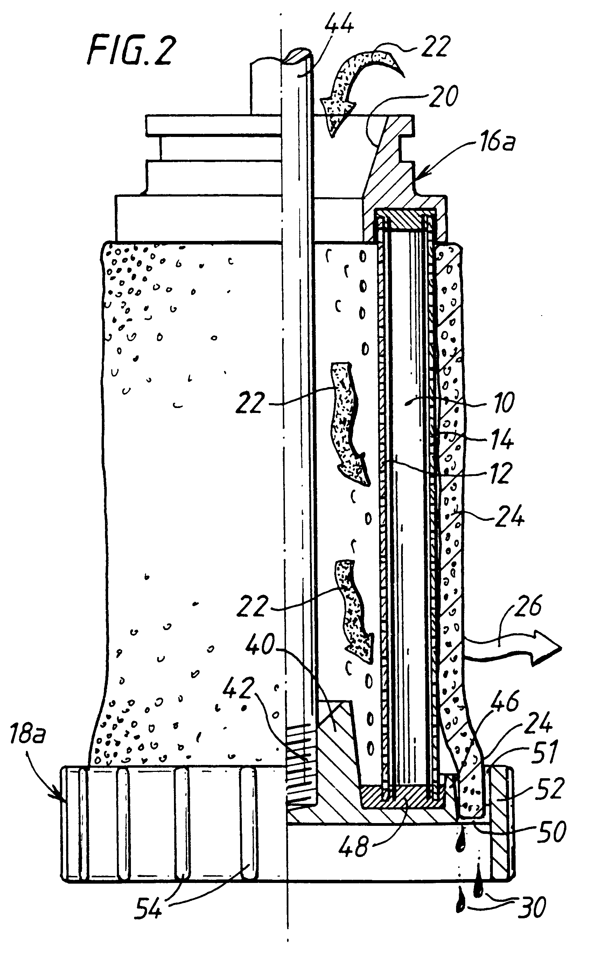

In Figure 2, there is shown a coalescing filter of similar overall construction to that of Figure 1, except that the top end cap 16a no longer has a threaded connection and the lower end cap 18a which is moulded in glass-filled nylon or other suitable plastic material has on its inner end an internally threaded boss 40 which fits onto a threaded lower end 42 of a tie rod 44 depending from a filter head (not shown). An upwardly facing flange 46 defines with the boss 40 and the intervening portions of the end cap 18a a channel into which the inner and outer foraminous cylinders 12,14, and the coalescing layer 10 are secured by resin 48. A plurality of relatively thin widely-spaced radial ribs 50 support an annular guard 52 in spaced relationship surrounding the lower end of the drainage layer 24 which rests on the ribs 50 but is otherwise unobstructed. The relatively large slots 51 which are defined between adjacent pairs of ribs 50 allow generally unobstructed drainage of droplets from the drainage layer 24. The guard 52 defines a relatively quiet zone for formation of the oil droplets i.e. air flow around the wet band is minimised. Finger grips 54 on the outside of the guard 52 enable the filter element to be tightened onto the end cap without risk of damage to the drainage layer.

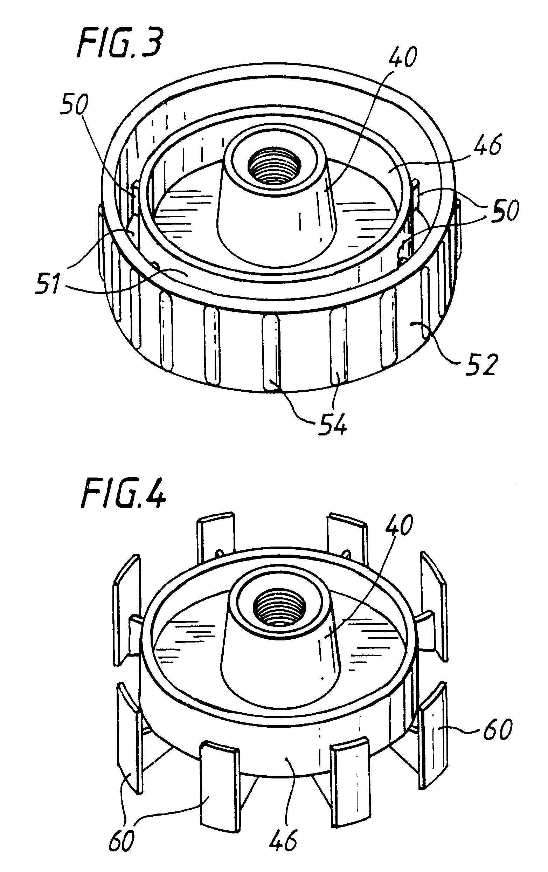

The end cap construction of Figure 4 is generally similar to that of Figure 3 except that the continuous guard 52 is replaced by a multiplicity of angularly spaced fingers 60, such that the drainage layer 24 fits between the fingers 60 and the flange 46.

In experimental tests it has been found that a filter according to the invention can provide a significant reduction in pressure drop at high flow rates of air, that the amount of oil mist appearing on the clean side of the filter is less than half the amount of oil mist present using a coalescing filter of otherwise similar construction, except that the drainage sleeve is tightly fitted into a channel in the end cap. The oil drainage layer used is typically a PVC impregnated reticulated polyether or polyurethane foam having typically 60 pores per inch and optionally impregnated with a fluorocarbon. The drainage layer can also be a felt of polyester or other material which may be impregnated with a fluorocarbon.

## Claims

1. A tubular filter element for filtering out oil mist from a gas contaminated therewith, and adapted to extend vertically downwards from the head of a filter housing, the element comprising a microporous filter layer (10) for coalescing the oil mist as the gas flows through the filter, a macroporous drainage layer (24) into which the coalesced liquid flows and through which the liquid runs to the lower end of the filter from which it drains as drops, an upper end cap (16a) for connection to the filter head and provided with a port (20) to admit the stream of oil contaminated gas into the interior of the filter, and a lower end cap (18a) which fits gas tightly to the filter layer (10) and closes the lower end of the filter, the filter layer (10) fitting within an upturned flange (46) of the end cap (18a), characterised in that:
(a) the lower end cap (18a) has a guard (52) that surrounds and is spaced radially apart from the filter and drainage layers (10,24) and has an axial extent from a position above to a position below the lower end of the drainage layer (24), the guard (52) further providing a finger grip to permit the element to be fitted onto or removed from the filter head without the user's fingers contacting the drainage layer (24);
(b) the lower end of the drainage layer (24) passes between the upturned flange (46) of the lower end cap and the guard (52) and terminates at an axial position below the filter layer (10); and
(c) portions (50) of the lower end cap extend between the guard (52) and the upturned flange (46) so that the guard (52) is supported in position, said portions (50) permitting generally unobstructed drainage of droplets from the drainage layer (24), whereby in use the height of the oil saturated band which forms at the lower region of the drainage layer is reduced.

2. The filter element of claim 1, wherein the coalescing layer is a pleated sheet or is a moulding of borosilicate glass micro fibres.

3. The element of claim 1 or 2, wherein the drainage layer is of an open-celled foam plastics material.

4. The element of any preceding claim, wherein the drainage layer has been treated with a fluorocarbon to minimise oil carry over.

5. The element of any preceding claim, wherein the guard (52) is continuous.

6. The element of any of claims 1 to 4, wherein the guard is interrupted.

## Patentansprüche

1. Rohrförmiges Filterelement zum Ausfiltern von Ölnebel aus einem mit diesem verunreinigten Gas, und das so ausgebildet ist, daß es sich ausgehend vom Kopf eines Filtergehäuses senkrecht nach unten erstreckt, wobei das Element eine mikroporöse Fiterschicht (10) zum Vereinigen des Ölnebels, wenn das Gas durch den Filter strömt, eine makroporöse Drainageschicht (24), in die die zusammengeflossene Flüssigkeit strömt und durch die die Flüssigkeit zum unteren Ende des Filters läuft, von dem es tropfenförmig abläuft, eine obere Abschlußkappe (16a) zum Verbinden mit dem Filterkopf, die mit einer Öffnung (20) zum Einlassen des Stroms von mit Öl verunreinigten Gas in das Innere des Filters versehen ist, und eine untere Abschlußkappe (18a) aufweist, die gasdicht in die Filterschicht (10) paßt und das untere Ende des Filters verschließt, wobei die Filterschicht (10) in einen hochgezogenen Flansch (46) der Abschlußkappe (18a) paßt, **dadurch gekennzeichnet**, daß:
(a) die untere Abschlußkappe (18a) einen Schutz (52) aufweist, der herumläuft und radial von der Filter- und der Drainageschicht (10, 24) beabstandet ist und sich axial von einer Position über dem unteren Ende der Drainageschicht (24) bis in eine Position darunter erstreckt, wobei der Schutz (52) ferner eine Fingergreifstelle aufweist, damit das Element an den Filterkopf angesetzt oder von ihm abgenommen werden kann, ohne daß die Finger eines Benutzers mit der Drainageschicht (24) in Kontakt kommen;
(b) das untere Ende der Drainageschicht (24) zwischen dem hochgezogenen Flansch (46) der unteren Abschlußkappe und dem Schutz (52) hindurchgeht und an einer axialen Position unter der Filterschicht (10) endet; und
(c) Teile (50) der unteren Abschlußkappe sich zwischen dem Schutz (52) und dem hochgezogenen Flansch (46) so erstrecken, daß der Schutz (52) an seiner Position gehalten wird, wobei die Teile (50) eine im wesentlichen unbehinderte Drainage von Tröpfchen aus der Drainageschicht (24) ermöglichen, wodurch im Gebrauch die Höhe des mit Öl gesättigten Bands, das sich im unteren Bereich der Drainageschicht ausbildet, verringert ist.

2. Filterelement nach Anspruch 1, bei dem die Koaleszenzschicht eine gefaltete Lage oder ein Gießteil aus Borsilikatglas-Mikrofasern ist.

3. Element nach einem der Ansprüche 1 oder 2, bei dem die Drainageschicht aus einem offenzelligen Schaumstoffmaterial besteht.

4. Element nach einem der vorstehenden Ansprüche, bei dem die Drainageschicht mit einem Fluorkohlenwasserstoff behandelt ist, um die Übertragung von Öl zu minimieren.

5. Element nach einem der vorstehenden Ansprüche, bei dem der Schutz (52) durchgehend verläuft.

6. Element nach einem der Ansprüche 1 bis 4, bei dem der Schutz unterbrochen ist.

## Revendications

1. Elément de filtre tubulaire pour filtrer un brouillard d'huile d'un gaz contaminé par celui-ci, et destiné à s'étendre verticalement vers le bas à partir de la tête d'un carter de filtre, l'élément comprenant une couche de filtre microporeuse (10) pour produire la coalescence du brouillard d'huile lorsque le gaz passe à travers le filtre, une couche de drainage microporeuse (24) dans laquelle s'écoule le liquide ayant fusionné par coalescence, et à travers laquelle le liquide passe vers l'extrémité inférieure du filtre d'où il s'écoule sous forme de gouttes, un chapeau d'extrémité supérieur (16a) destiné à se relier à la tête de filtre et comportant un orifice (20) destiné à recevoir à l'intérieur du filtre le courant de gaz contaminé par l'huile, et un chapeau d'extrémité inférieur (18a) qui s'adapte de manière étanche au gaz sur la couche de filtre (10) et ferme l'extrémité inférieure du filtre, la couche de filtre (10) s'adaptant à l'intérieur d'une collerette tournée vers le haut (46) du chapeau d'extrémité (18a), caractérisé en ce que :
(a) la chapeau d'extrémité inférieur (18a) comporte une garde (52) qui entoure, avec une certaine distance d'espacement radial, les couches de filtre et de drainage (10, 24), et présente une dimension axiale allant d'une position au-dessus à une position au-dessous de l'extrémité inférieure de la couche de drainage (24), la garde (52) comportant en outre une prise pour les doigts de façon qu'on puisse adapter l'élément sur la tête de filtre ou le retirer de celle-ci, sans que les doigts de l'utilisateur viennent en contact avec la couche de drainage (24) ;
(b) l'extrémité inférieure de la couche de drainage (24) passe entre la collerette tournée vers le haut (46) du chapeau d'extrémité inférieur, et la garde (52), pour se terminer dans une position axiale au-dessous de la couche de filtre (10) ; et
(c) des parties (50) du chapeau d'extrémité inférieur s'étendent entre la garde (52) et la collerette tournée vers le haut (46), de façon que la garde (52) soit supportée en place, ces parties (50) permettant un drainage d'une façon générale sans obstruction des gouttelettes provenant de la couche de drainage (24), ce qui permet ainsi de réduire, en cours d'utilisation, la hauteur de la bande saturée d'huile qui se forme dans la zone inférieure de la couche de drainage.

2. Elément de filtre selon la revendication 1, caractérisé en ce que la couche de coalescence est une feuille plissée ou un moulage de microfibres de verre au borosilicate.

3. Elément selon la revendication 1 ou 2, caractérisé en ce que la couche de drainage est réalisée dans une matière plastique en mousse à cellules ouvertes.

4. Elément selon l'une quelconque des revendications précédentes, caractérisé en ce que la couche de drainage a été traitée par du fluorure de carbone pour minimiser le transport d'huile.

5. Elément selon l'une quelconque des revendications précédentes, caractérisé en ce que la garde (52) est continue.

6. Elément selon l'une quelconque des revendications 1 à 4, caractérisé en ce que la garde est interrompue.
